# EUROPEAN PATENT SPECIFICATION

(11) **EP 4 049 899 B1**
(45) Date of publication and mention of the grant of the patent: **25.06.2025**
(21) Application number: 22155470.2
(22) Date of filing: 07.02.2022
(51) Int. Cl.: B60R 16/02, B62D 25/20, B60H 1/00, B60K 1/04

(54) **ELECTRICAL EQUIPMENT**
ELEKTRISCHE AUSRÜSTUNG
ÉQUIPEMENT ÉLECTRIQUE

(30) Priority: 26.02.2021 JP 2021030107
(43) Date of publication of application: 31.08.2022
(73) Proprietor: Suzuki Motor Corporation, Hamamatsu-shi, Shizuoka 432-8611 (JP)
(72) Inventor: KITAHARA, Yugo, Hamamatsu-shi, 432-8611 (JP); ANDO, Shoichiro, Hamamatsu-shi, 432-8611 (JP); TSUGE, Atsushi, Hamamatsu-shi, 432-8611 (JP)
(74) Representative: Henkel & Partner mbB

(56) References cited:
- EP-A1- 2 685 524
- WO-A2-2012/028927
- DE-T5- 112014 006 229
- US-A1- 2018 086 192

## Description

### [Technical Field]

The present invention relates to a vehicle with an electrical equipment.

### [Background Art]

Conventionally, vehicle substructures have been known, each of which includes a high-voltage battery installed between a floor panel and a seat when an electric component such as a battery cannot be accommodated in an engine room or below the floor panel (see JP 2019-206 303 A).

The vehicle substructure described in JP 2019-206 303 A includes a cross member extending in a vehicle width direction so as to be located in front of the electric component, the cross member being attached with a wire harness extending in the vehicle width direction so as to be located between the electric component and the cross member.

A hole penetrating in a vehicle front-rear direction is provided at a center portion of the cross member in the vehicle width direction, in which a connection part between an air-conditioner duct and another air-conditioner duct is disposed.

US 2018/086192 discloses a vehicle comprising a floor panel, a cross member with a hole portion, the cross member extending in a vehicle width direction, a first wire harness attached to the cross member so as to be located above the hole portion, the first wire harness extending in the vehicle width direction, and an electrical equipment installed on the vehicle, the electrical equipment including an electric component.

EP 2 685 524 A1 discloses a battery pack for a vehicle which includes a battery, a battery case including a battery tray which contains the battery, and a battery cover which is mounted on the battery tray, a cooling unit provided in an end part of the battery case in a first direction that is a longitudinal direction of the battery case, and configured to supply cooling air into the battery case. An air flow passage is provided above the battery, bulges outward and extends along the first direction, in a center part in a second direction perpendicular to the first direction inside the battery case, wherein one end of the air flow passage is connected to the cooling unit, and an electric cable is arranged between the air flow passage and the battery cover in the outward bulging portion, along the first direction, for supplying an electric power of the battery to a motor of the vehicle.

### [Summary of Invention]

### [Technical Problem]

According to the conventional vehicle substructure, since the hole in which the connection part of the duct is provided at the center portion of the cross member in the vehicle width direction, when the wire harness is attached to the cross member, it is necessary to bypass the hole and set a mounting point of the wire harness with respect to the cross member.

For this reason, when the hole is provided below the cross member and the mounting point of the wire harness is set above the hole, a center portion of the wire harness in the vehicle width direction becomes a top of a mountain.

For this reason, when the vehicle receives an impact from the side in the vehicle width direction, the wire harness deforms so as to bend upward. As a result, the impact of deformation of the wire harness may be applied above the floor panel and there is still room for improvement in preventing the impact of deformation of the wire harness from being applied above the floor panel.

The present invention has been implemented focusing on the above-described circumstances and it is an objective of the present invention to provide a vehicle with an electrical equipment capable of preventing, when an impact is applied to the vehicle from the vehicle width direction, the impact caused by deformation of the wire harness from being applied above the floor panel.

### [Solution to Problem]

According to the present invention, there is provided a vehicle with the features of claim 1 comprising an electrical equipment installed on the vehicle, the vehicle including: a cross member with a hole portion, the cross member extending in a vehicle width direction above a floor panel; and a first wire harness attached to the cross member so as to be located above the hole portion, the first wire harness extending in the vehicle width direction, the electrical equipment including: an electric component installed on the floor panel; and a cover member installed on the floor panel so as to cover the electric component, wherein the cover member includes a side wall facing the first wire harness, and a bulging part bulging from a wall surface of the side wall toward the first wire harness, and the bulging part covers the first wire harness from above.

### [Advantageous Effect of Invention]

Thus, according to the present invention, it is possible to prevent, when an impact is applied to a vehicle from a vehicle width direction, an impact caused by deformation of a wire harness from being applied above a floor panel.

### [Brief Description of Drawings]

Figure 1 is a plan view of a floor panel of a vehicle provided with electrical equipment according to an embodiment of the present invention.
Figure 2 is a diagram illustrating a cross member of the vehicle provided with the electrical equipment according to the embodiment of the present invention viewed from behind.
Figure 3 is a plan view of a battery pack and surrounding floor panel of the vehicle provided with the electrical equipment according to the embodiment of the present invention.
Figure 4 is a diagram illustrating the battery pack of the vehicle provided with the electrical equipment according to the embodiment of the present invention viewed from the left.
Figure 5 is a plan view of a battery and the surrounding floor panel of the vehicle provided with the electrical equipment according to the embodiment of the present invention.
Figure 6 is a diagram illustrating the battery of the vehicle provided with the electrical equipment according to the embodiment of the present invention viewed from the left.
Figure 7 is a diagram illustrating the battery pack of the vehicle provided with the electrical equipment according to the embodiment of the present invention viewed from below.
Figure 8 is a diagram illustrating the battery of the vehicle provided with the electrical equipment according to the embodiment of the present invention viewed from forward.
Figure 9 is a cross-sectional view of Figure 3 viewing from a IX-IX arrow direction.
Figure 10 is a diagram illustrating the battery pack of the vehicle provided with the electrical equipment according to the embodiment of the present invention viewed from forward.

### [Description of Embodiment]

An electrical equipment according to an embodiment of the present invention is installed on a vehicle, the vehicle including: a cross member with a hole portion, the cross member extending in a vehicle width direction above a floor panel; and a first wire harness attached to the cross member so as to be located above the hole portion, the first wire harness extending in the vehicle width direction, the electrical equipment including: an electric component installed on the floor panel; and a cover member installed on the floor panel so as to cover the electric component, wherein the cover member includes a side wall facing the first wire harness, and a bulging part bulging from a wall surface of the side wall toward the first wire harness, and the bulging part covers the first wire harness from above.

Thus, with the electrical equipment according to the present invention, it is possible to prevent, when an impact is applied to a vehicle from a vehicle width direction, an impact caused by deformation of a wire harness from being applied above a floor panel.

### [Embodiment]

Hereinafter, an electrical equipment according to an embodiment of the present invention will be described with reference to drawings.

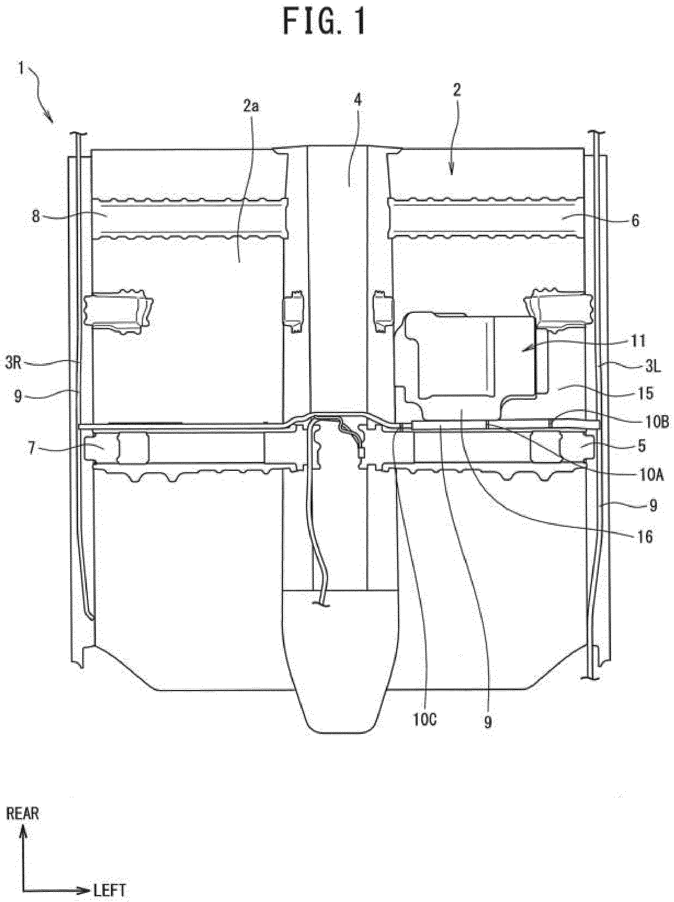

Figure 1 to Figure 10 are diagrams illustrating a protective structure for an electrical equipment according to an embodiment of the present invention. In Figure 1 to Figure 10, up-down, front-rear and left-right directions are defined such that a front-rear direction of a vehicle on which a battery pack is mounted is the front-rear direction, a left-right direction of the vehicle (vehicle width direction) is the left-right direction and an up-down direction of the vehicle (vehicle height direction) is the up-down direction.

First, a configuration will be described.

In Figure 1, a vehicle 1 includes a floor panel 2. A left-side side sill 3L is provided at a left end portion of the floor panel 2 and the left-side side sill 3L extends in the front-rear direction along the floor panel 2. A right-side side sill 3R is provided at a right end portion of the floor panel 2 and the right-side side sill 3R extends in the front-rear direction along the floor panel 2.

A floor tunnel 4 is provided in a center portion of the floor panel 2 in a vehicle width direction and the floor tunnel 4 bulges upward from the floor panel 2.

A front-side cross member 5 and a rear-side cross member 6 are attached between the floor tunnel 4 and the left-side side sill 3L, and the front-side cross member 5 and the rear-side cross member 6 extend in the vehicle width direction spaced apart in the front-rear direction.

A front-side cross member 7 and a rear-side cross member 8 are attached between the floor tunnel 4 and the right-side side sill 3R, and the front-side cross member 7 and the rear-side cross member 8 extend in the vehicle width direction spaced apart in the front-rear direction.

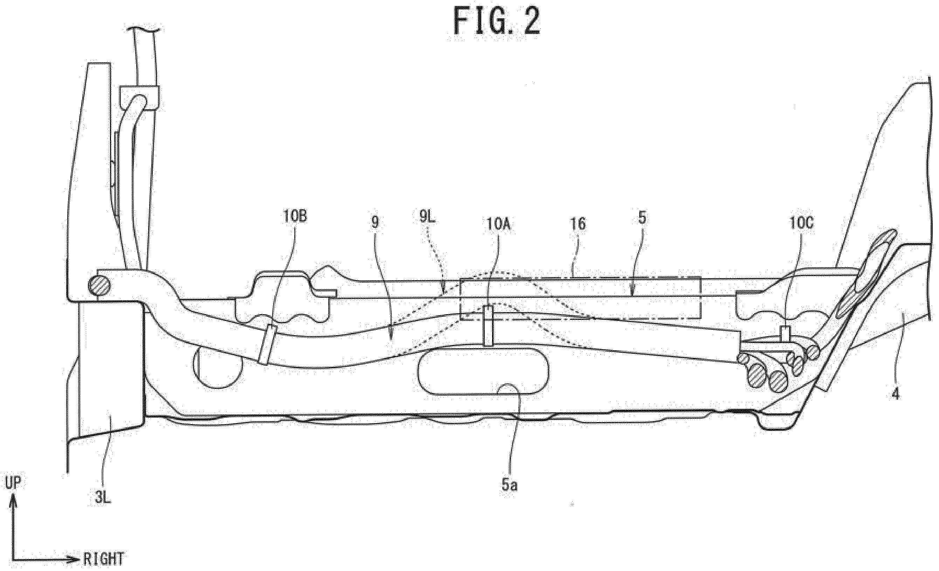

As shown in Figure 2, part of a wire harness 9 is attached to the front-side cross member 5 and the wire harness 9 extends in the vehicle width direction. More specifically, as shown in Figure 1, the wire harness 9 extends in the front-rear direction along the right-side side sill 3R, branches from a center portion in a direction in which the right-side side sill 3R extends and extends to the floor tunnel 4 along the front-side cross member 7.

The wire harness 9 extends in the vehicle width direction from the floor tunnel 4 along the front-side cross member 5 and then extends in the front-rear direction along the left-side side sill 3L. The front-side cross member 5 of the present embodiment constitutes a cross member and the wire harness 9 constitutes a first wire harness.

As shown in Figure 2, the front-side cross member 5 includes a hole portion 5a formed at the center portion in the vehicle width direction. The hole portion 5a is intended to pass a vehicle-mounted component to be installed in the front-rear direction across the front-side cross member 5. For example, a duct of an air conditioner to be installed in front of the front-side cross member 5 is passed through the hole portion 5a and the duct to be passed through the hole portion 5a extends behind the front-side cross member 5.

The front-side cross member 5 includes a band-shaped member 10A. The band-shaped member 10A is provided above the hole portion 5a and configured to fix the center portion of the wire harness 9 in the vehicle width direction to the front-side cross member 5.

The front-side cross member 5 includes band-shaped members 10B and 10C. The band-shaped members 10B and 10C are located below the band-shaped member 10A and at left and right end portions of the front-side cross member 5 in the vehicle width direction with respect to the band-shaped member 10A and configured to fix the left and right end portions of the wire harness 9 to the front-side cross member 5.

That is, the band-shaped member 10B is located on the left end side in the vehicle width direction with respect to the band-shaped member 10A and the band-shaped member 10C is located on the right end side in the vehicle width direction with respect to the band-shaped member 10A.

Here, the center portion of the wire harness 9 in the vehicle width direction and the left and right end portions in the vehicle width direction are based on the length of the front-side cross member 5 in the vehicle width direction, and mean the center portion of the region of the wire harness 9 routed in the vehicle width direction of the front-side cross member 5 and the left and right end portions in the vehicle width direction.

The band-shaped member 10A of the present embodiment constitutes a first mounting part, and the band-shaped members 10B and 10C constitute second mounting parts.

As shown in Figure 1, Figure 3 and Figure 4, a battery pack 11 as an electrical apparatus is installed on an upper surface 2a of the floor panel 2 and the battery pack 11 is installed in a space between an assistant driver's seat (not shown) and the floor panel 2. Note that the battery pack 11 may also be installed in a space between the driver's seat (not shown) and the floor panel 2.

Since the battery pack 11 is installed between the assistant driver's seat and the floor panel 2, the battery pack 11 can be installed in a vehicle room in a cooler environment than in an engine room, and performance of a battery 12, which will be described later, can be extracted more easily.

In addition to this, it is possible to prevent the space of a baggage compartment from being blocked by the battery pack 11, improve installation performance of the battery pack 11, and moreover eliminate the need for installing the battery pack 11 in the engine room, and thus reduce the size of the engine room.

As shown in Figure 1, in a plan view of the vehicle 1, the battery pack 11 is located among the left-side side sill 3L, the floor tunnel 4, the front-side cross member 5 and the rear-side cross member 6.

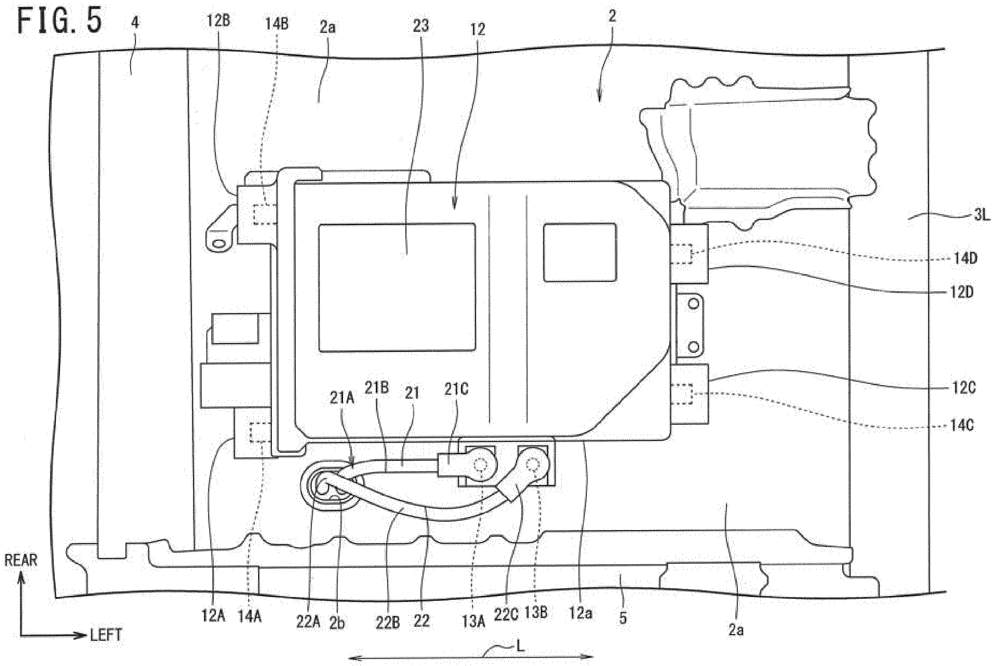

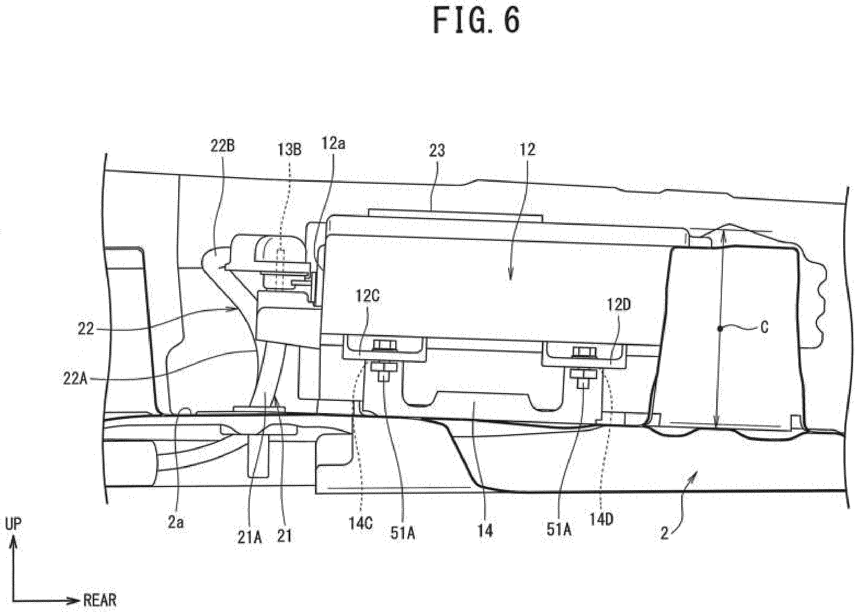

As shown in Figure 5 and Figure 6, the battery pack 11 includes the battery 12 as an electric component. The battery 12 includes a plurality of battery modules (not shown), a battery holder that accommodates the plurality of battery modules and protect the battery modules and a substrate part 23 provided on an upper surface of the battery holder.

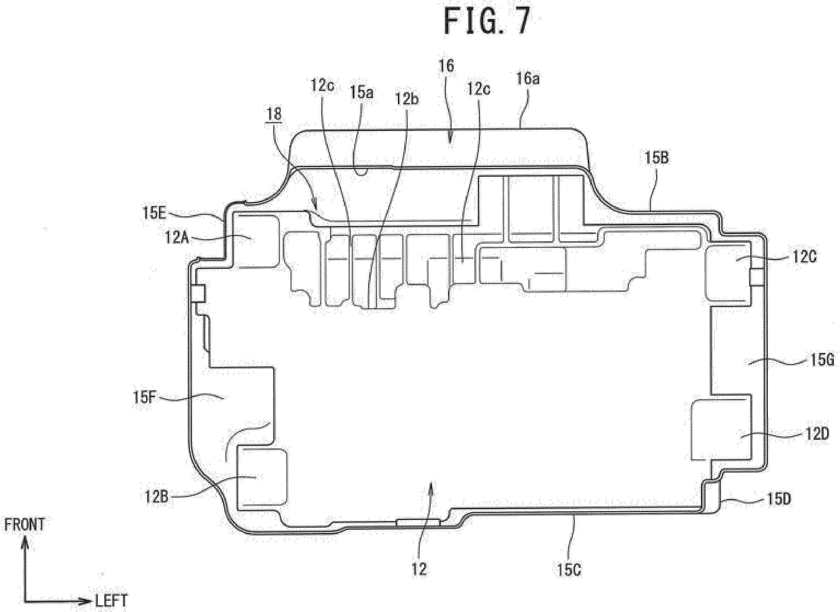

As shown in Figure 5 and Figure 7, the battery 12 is provided with a plurality of fixing pieces 12A, 12B, 12C and 12D and the fixing pieces 12A, 12B, 12C and 12D protrude outward from the side surface of the battery 12 in the vehicle width direction (outward to the left and right).

As shown in Figure 6, the floor panel 2 is provided with a bracket 14 and the bracket 14 is provided with fixing pieces 14A and 14B (see Figure 5).

The fixing pieces 14A and 14B protrude upward from the right end portion of the bracket 14 and are located at positions higher than the upper surface 2a of the floor panel 2.

The bracket 14 is provided with fixing pieces 14C and 14D (see Figure 5). The fixing pieces 14C and 14D protrude upward from a left end portion of the bracket 14 and are located at positions higher than the upper surface 2a of the floor panel 2. The fixing pieces 14A and 14B, and the fixing pieces 14C and 14D are located at the same height position.

The fixing pieces 12A and 12B of the battery 12 are fixed to the fixing pieces 14A and 14B with bolts (not shown). The fixing pieces 12C and 12D of the battery 12 are fixed to the fixing pieces 14C and 14D with a bolt 51A. The fixing pieces 12A, 12B, 12C and 12D of the present embodiment constitute fixing parts.

Thus, the battery 12 is fixed to the floor panel 2 via the bracket 14, to be upward away from the floor panel 2 by the bracket 14. The fixing pieces 14A, 14B, 14C and 14D of the present embodiment constitute fixed parts.

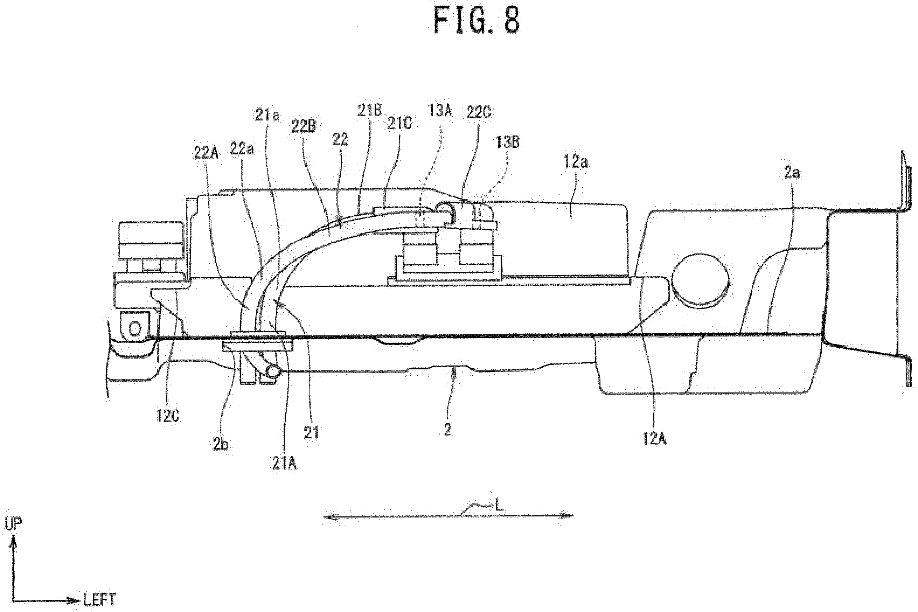

As shown with virtual lines in Figure 5 and Figure 8, terminal parts 13A and 13B are provided on an upper part of a front surface 12a of the battery 12, and the terminal parts 13A and 13B in a plan view of the vehicle 1 are installed side by side in the vehicle width direction. The vehicle width direction is a direction L in which the terminal parts 13A and 13B are arranged. Hereinafter, the arrangement direction L of the terminal parts 13A and 13B will be referred to as an arrangement direction L.

The terminal parts 13A and 13B are installed above the fixing pieces 14A, 14B, 14C and 14D, and above a center portion C of the battery 12 in the height direction (see Figure 6). Note that the wire harness 9 is omitted in Figure 5.

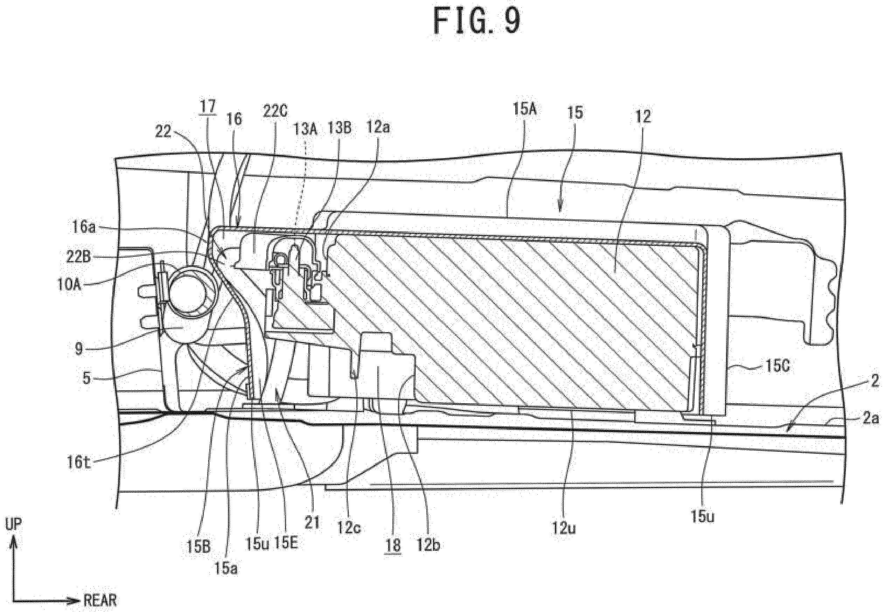

As shown in Figure 9, the terminal parts 13A and 13B are located in front of the front surface 12a of the battery 12 and extend in the up-down direction. Note that the terminal parts 13A and 13B have an identical shape and overlap in the vehicle width direction. The terminal part 13A of the present embodiment constitutes a first terminal part and the terminal part 13B constitutes a second terminal part.

As shown in Figure 6, the substrate part 23 is provided above the terminal parts 13A and 13B. The substrate part 23 is a control substrate configured to detect a remaining capacity of the battery module and control charging/discharging or the like.

As shown in Figure 5, an opening portion 2b is formed on the floor panel 2. The opening portion 2b is located on the floor tunnel 4 side with respect to the terminal parts 13A and 13B, and is aligned with the arrangement direction L of the terminal parts in a plan view of the vehicle 1.

The terminal part 13B is installed at a position farther from the opening portion 2b in the arrangement direction L of the terminal parts than the terminal part 13A.

As shown in Figure 8, wire harnesses 21 and 22 are connected to the battery pack 11. The wire harnesses 21 and 22 are introduced into the cover member 15 through the opening portion 2b from below the floor panel 2, extends above the floor panel 2 (i.e., within the cover member 15) in the arrangement direction L of the terminal parts, and are connected to the terminal part 13A and the terminal part 13B via connectors 21C and 22C provided at end portions of the wire harnesses 21 and 22, respectively.

The wire harnesses 21 and 22 are routed passing through the floor tunnel 4 below the floor panel 2 and the other end portion thereof is connected to another electric component such as an auxiliary machine. Thus, electric power of the battery 12 is supplied to the other electric component such as an auxiliary machine by the wire harnesses 21 and 22. The wire harnesses 21 and 22 of the present embodiment constitute a second wire harness.

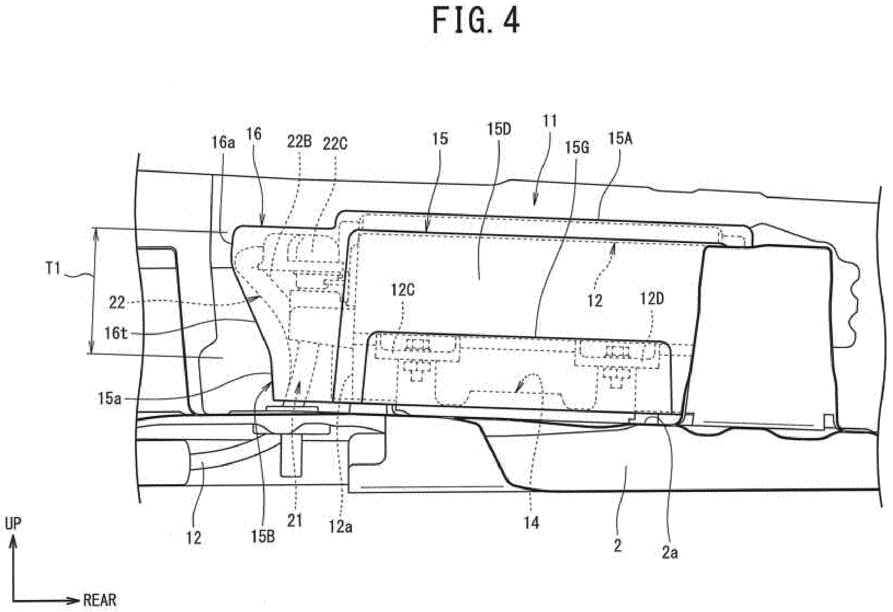

As shown in Figure 4 and Figure 9, the battery pack 11 includes a cover member 15. The cover member 15 includes a ceiling wall 15A, and a front wall 15B, a rear wall 15C, a left side wall 15D and a right side wall 15E extending downward from the ceiling wall 15A.

The ceiling wall 15A covers above the opening portion 2b, the upper surface of the battery 12 and the wire harnesses 21 and 22 from above. The front wall 15B covers the front surface 12a of the battery 12 and the wire harnesses 21 and 22, and the rear wall 15C, the left side wall 15D and the right side wall 15E cover the rear surface, the left side surface and the right side surface of the battery 12.

That is, the opening portion 2b is located inside the front wall 15B, the rear wall 15C, the left side wall 15D and the right side wall 15E, and is covered with the cover member 15. The front wall 15B, the rear wall 15C, the left side wall 15D and the right side wall 15E of the present embodiment constitute side walls.

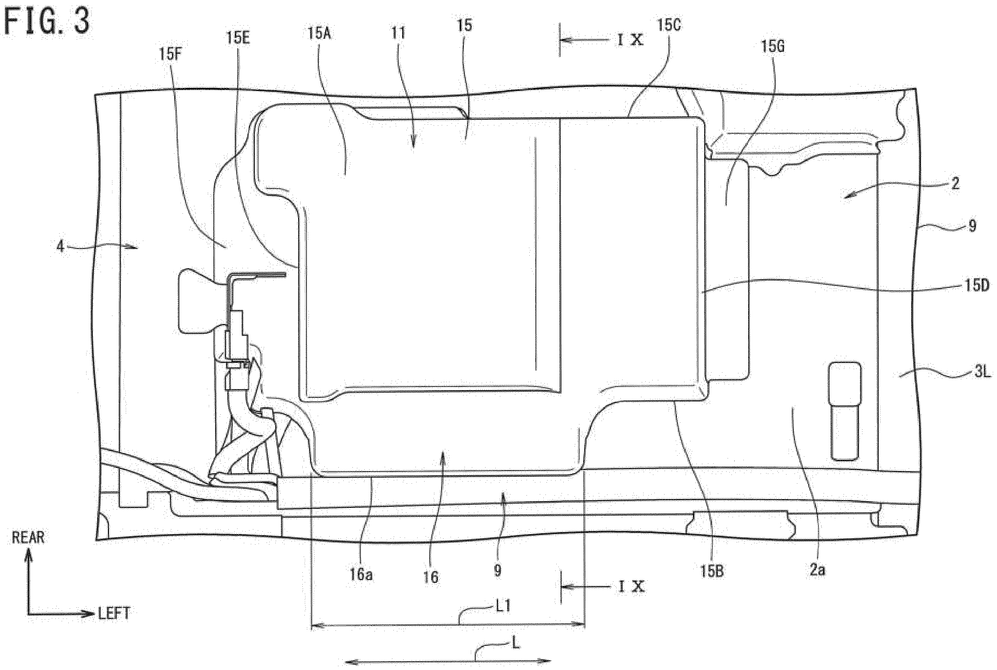

The front wall 15B of the cover member 15 faces the wire harness 9 in the front-rear direction, and the wire harness 9 is routed along the front wall 15B in the vehicle width direction (see Figure 3).

A bottom end portion 15u of the front wall 15B, the rear wall 15C, the left side wall 15D and the right side wall 15E is close to the floor panel 2 and is located at the same height position as the position of an undersurface 12u of the battery 12 (see Figure 9). The lengths (heights) of the front wall 15B, the rear wall 15C, the left side wall 15D and the right side wall 15E in the up-down direction are identical.

The front surface 12a of the battery 12 of the present embodiment constitutes a side surface of the electric component and the front wall 15B of the cover member 15 constitutes a side wall of the cover member.

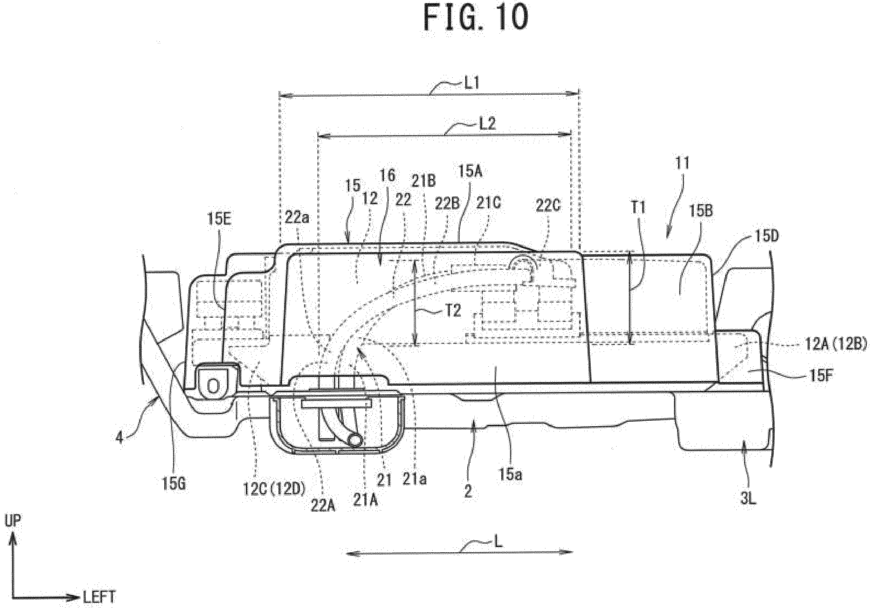

As shown in Figure 3 and Figure 7, the cover member 15 is provided with covering parts 15F and 15G. The covering part 15F protrudes outward (rightward) from the right side wall 15E of the cover member 15 and covers the fixing pieces 12A and 12B of the battery 12 from above and from the left (see Figure 7 and Figure 10).

The covering part 15G protrudes outward (leftward) from the left side wall 15D of the cover member 15 and covers the fixing pieces 12C and 12D of the battery 12 from above and from the left (see Figure 4 and Figure 7).

As shown in Figure 9, the front wall 15B of the cover member 15 facing the front surface 12a of the battery 12 in the front-rear direction is provided with a bulging part 16 (see Figure 3, Figure 4 and Figure 7).

The bulging part 16 is located above the bottom end portion 15u of the front wall 15B and bulges in a direction away from the front surface 12a of the battery 12 with respect to the wall surface 15a of the front wall 15B.

As shown in Figure 4 and Figure 9, the bulging part 16 includes an inclined part 16t. The inclined part 16t is inclined so as to be further away from the front surface 12a of the battery 12 as it extends upward from the wall surface 15a of the front wall 15B. In the bulging part 16, a distal end portion 16a in the bulging direction located above the inclined part 16t is furthest forward away from the front surface 12a of the battery 12.

The terminal parts 13A and 13B are located at the same height position as the position of the bulging part 16 and face the bulging part 16 in the front-rear direction.

The terminal parts 13A and 13B of the present embodiment are located at the same height position as the position of the distal end portion 16a in the bulging direction of the bulging part 16 which is furthest forward away from the battery 12.

As shown in Figure 9, the bulging part 16 bulges from the wall surface 15a of the front wall 15B of the cover member 15 on the wire harness 9 side (toward the wire harness 9) and covers the wire harness 9 from above.

The bulging part 16 is located above the band-shaped member 10A. As shown in Figure 1, the bulging part 16 overlaps the band-shaped member 10A in a plan view of the vehicle 1. In other words, the bulging part 16 is provided alongside the band-shaped member 10A in the up-down direction.

Since the terminal part 13B is installed at a position farther from the opening portion 2b than the terminal part 13A in the arrangement direction L of the terminal parts, the routing length of the wire harness 22 in the cover member 15 is longer than the routing length of the wire harness 21.

As shown in Figure 9, the wire harness 22 is installed in a space portion 17 formed by the bulging part 16 inside the cover member 15 and extends in the arrangement direction L of the terminal parts along the inclined part 16t.

Inside the cover member 15, the wire harness 21 is installed closer to the front surface 12a side of the battery 12 than the wire harness 22 installed in the space portion 17 formed by the bulging part 16.

As shown in Figure 8, since the battery 12 is formed to have a longer length in the vehicle width direction (lateral direction) than a length in the up-down direction (longitudinal direction), the wire harnesses 21 and 22 are routed inside the cover member 15 so as to have a longer routing length in the arrangement direction L of the terminal parts than a routing length in the up-down direction.

More specifically, the wire harnesses 21 and 22 include lower wire harness parts 21A and 22A, and upper wire harness parts 21B and 22B respectively.

The lower wire harness parts 21A and 22A extend above the floor panel 2 from the opening portion 2b of the floor panel 2.

The upper wire harness parts 21B and 22B extend in the arrangement direction L of the terminal parts from the upper ends 21a and 22a of the lower wire harness parts 21A and 22A, and are connected to the terminal parts 13A and 13B.

In the wire harnesses 21 and 22 of the present embodiment, the upper wire harness parts 21B and 22B are routed inside the cover member 15 so as to be longer than the lower wire harness parts 21A and 22A.

As shown in Figure 10, the bulging part 16 is formed to have a length L1 in the arrangement direction L of the terminal parts (see Figure 3) longer than a routing length L2 of the wire harnesses 21 and 22 in the arrangement direction L of the terminal parts inside the cover member 15.

The bulging part 16 is formed to have a length T1 in the up-down direction longer than a length (height) T2 of the upper wire harness parts 21B and 22B in the up-down direction. The "length T2" of the upper wire harness part 21B or the upper wire harness part 22B in the up-down direction inside the cover member 15 is a length (height) from an upper end of the upper wire harness parts 21B and 22B located at the highest position to a bottom end portion of the upper wire harness part 21B or the upper wire harness part 22B located at the lowest position.

As shown in Figure 9, in a side view of the battery 12, that is, when the battery 12 is viewed from the vehicle width direction, the bulging part 16 is installed at a position that overlaps with the upper wire harness part 22B. That is, the bulging part 16 and the upper wire harness part 22B overlap each other in the front-rear direction.

Note that the lower wire harness parts 21A and 22A may be routed so as to be longer than the upper wire harness parts 21B and 22B. In this case, the bulging part 16 in the side view of the battery 12 may be installed at a position that overlaps with the lower wire harness part 22A.

As shown in Figure 9, a notch portion 12b is formed on the front surface 12a of the battery 12 and the notch portion 12b is located below the terminal parts 13A and 13B.

A space portion 18 surrounded by the notch portion 12b is formed inside the cover member 15.

As shown in Figure 7 and Figure 9, a radiation fin 12c is formed in the notch portion 12b and the radiation fin 12c is installed in the space portion 18.

Next, effects of the battery pack 11 of the present embodiment will be described.

The battery pack 11 of the present embodiment is installed on the vehicle 1, and the vehicle 1 includes the front-side cross member 5 with the hole portion 5a, which is installed above the floor panel 2 so as to extend in the vehicle width direction, and the wire harness 9 attached to the front-side cross member 5 so as to be located at a position above the hole portion 5a and extending in the vehicle width direction.

The battery pack 11 is provided with the battery 12 installed on the floor panel 2 and the cover member 15 installed on the floor panel 2 so as to cover the battery 12.

The cover member 15 includes the front wall 15B facing the wire harness 9 and the bulging part 16 provided on the front wall 15B and bulges from the wall surface 15a of the front wall 15B to the wire harness 9 side, and the bulging part 16 covers the wire harness 9 from above. In other words, in a plan view of the vehicle, the bulging part 16 covers at least a part of the wire harness 9.

When an impact is applied to the vehicle 1 from the vehicle width direction and the wire harness 9 deforms upward toward the floor panel 2 (see the wire harness 9L in Figure 2), it is possible to cause the wire harness 9 to collide with the bulging part 16 and prevent the wire harness 9 from deforming above the floor panel 2.

This makes it possible to prevent the wire harness 9 from colliding with the assistant driver's seat above the floor panel 2 and prevent an impact from being applied to the assistant driver's seat.

It is also possible to use the bulging part 16 of the cover member 15 to prevent the wire harness 9 from deforming upward, thereby eliminate the need for providing a new restricting member for restricting upward deformation of the wire harness 9, prevent an increase in the number of parts of the vehicle 1 and an increase in manufacturing man-hours and thereby reduce the manufacturing cost of the vehicle 1.

The battery pack 11 of the present embodiment includes the front-side cross member 5 provided above the hole portion 5a, the band-shaped member 10A configured to attach the wire harness 9 to the front-side cross member 5 and the band-shaped members 10B and 10C located below the band-shaped member 10A and configured to attach the wire harness 9 to the front-side cross member 5.

When the band-shaped member 10A is provided at the center portion of the front-side cross member 5 in the vehicle width direction and the band-shaped members 10B and 10C are provided below the band-shaped member 10A and at left and right end portions of the front-side cross member 5 in the vehicle width direction, it is possible to cause, when an impact is applied to the vehicle 1 from the vehicle width direction, the wire harness 9 to deform so that the center portion of the wire harness 9 in the vehicle width direction becomes the top of a mountain and set the wire harness 9 so as to collide with the bulging part 16.

This makes it possible to more effectively prevent the wire harness 9 from deforming above the floor panel 2. As a result, it is possible to more effectively prevent the wire harness 9 from colliding with the assistant driver's seat above the floor panel 2 and more effectively prevent an impact from being applied to the assistant driver's seat.

According to the battery pack 11 of the present embodiment, the floor panel 2 includes the opening portion 2b configured to route the wire harnesses 21 and 22 from below the floor panel 2 into the cover member 15.

The battery 12 includes the terminal parts 13A and 13B to which the wire harnesses 21 and 22 are connected on the front surface 12a facing the front wall 15B of the cover member 15, and the wire harnesses 21 and 22 are routed to the space portion 17 formed by the bulging part 16.

Using the space portion 17 formed by the bulging part 16 in this way, the wire harnesses 21 and 22 can be routed into the cover member 15. This makes it possible not only to improve routing performance of the wire harnesses 21 and 22 but also to route more wire harnesses using the cover member 15.

The terminal part 13A, the terminal part 13B and the opening portion 2b are arranged in the arrangement direction L of the terminal parts in a plan view of the vehicle 1, and when the wire harnesses 21 and 22 pass through the opening portion 2b from below the floor panel 2 and extend above the floor panel 2 and in the arrangement direction L of the terminal parts, and are connected to the terminal parts 13A and 13B, it is possible to gently bend the wire harnesses 21 and 22 which become long inside the cover member 15 and route them inside the cover member 15.

As a result, it is possible to prevent an excessive load from being applied to the wire harnesses 21 and 22 and protect the wire harnesses 21 and 22.

Note that although the terminal parts of the present embodiment are constructed of the terminal parts 13A and 13B, there may be three or more terminal parts. Therefore, three or more wire harnesses may also be routed.

Although the wire harness 22 is routed in the space portion 17 of the bulging part 16, both wire harnesses 21 and 22 may be routed in the space portion 17 of the bulging part 16.

The electric component is not limited to the battery 12 but is applicable to, for example, a DC-DC converter. However, the electric component is not limited to a battery or a DC-DC converter, but it can be any electrical part mounted on the vehicle 1.

### [Reference Signs List]

1...vehicle, 2...floor panel, 2b...opening, 5...front-side cross member, 5a...hole portion, 9...wire harness (first wire harness), 10A...band-shaped member (first mounting part), 10B, 10C...band-shaped member (second mounting part), 11...battery pack (electrical equipment), 12...battery (electric component), 12a...front surface (side surface of electric component), 13A, 13B...terminal part, 15...cover member, 15a...wall surface (wall surface of side wall of cover member), 15B...front wall (side wall of cover member), 16...bulging part, 17...space portion (space portion formed by bulging part), 21, 22... wire harness (second wire harness)

## Claims

1. A vehicle (1) comprising:
a floor panel (2);
a cross member (5) with a hole portion (5a), the cross member (5) extending in a vehicle width direction above the floor panel (2);
a first wire harness (9) attached to the cross member (5) so as to be located above the hole portion (5a), the first wire harness (9) extending in the vehicle width direction; and
an electrical equipment (11) installed on the vehicle (1), the electrical equipment (11) including:
an electric component (12) installed on the floor panel (2); and
a cover member (15) installed on the floor panel (2) so as to cover the electric component (12), wherein
the cover member (15) includes a side wall (15B) facing the first wire harness (9), and a bulging part (16) bulging from a wall surface (15a) of the side wall (15B) toward the first wire harness (9), and
the bulging part (16) covers the first wire harness (9) from above.

2. The vehicle (1) according to claim 1, wherein
the cross member (5) includes a first mounting part (10A) to fix the first wire harness (9) to the cross member (5), and a second mounting part (10B, 10C) to fix the first wire harness (9) to the cross member (5), the first mounting part (10A) being located above the hole portion (5a), the second mounting part (10B, 10C) being located below the first mounting part (10A), and
the bulging part (16) is located above the first mounting part (10A), and overlaps with the first mounting part (10A) in a plan view of the vehicle (1).

3. The vehicle (1) according to claim 1 or 2, further comprising a second wire harness (21, 22), wherein
the floor panel (2) is formed with an opening portion (2b) through which the second wire harness (21, 22) is introduced into the cover member (15),
the electric component (12) includes, at a side surface (12a) thereof facing the side wall (15B) of the cover member (15), a terminal part (13A, 13B) to which the second wire harness (21, 22) is connected, and
the second wire harness (21, 22) is routed to a space portion (17) defined by the bulging part (16).

## Patentansprüche

1. Fahrzeug (1) umfassend:
ein Bodenpaneel (2);
ein Querelement (5) mit einem Lochabschnitt (5a), wobei sich das Querelement (5) in einer Fahrzeug-Querrichtung über dem Bodenpaneel (2) erstreckt;
einen ersten Kabelbaum (9), der an dem Querelement (5) angebracht ist, so dass es sich über dem Lochabschnitt (5a) befindet, wobei sich der erste Kabelbaum (9) in der Fahrzeug-Querrichtung erstreckt; und
eine elektrische Ausrüstung (11), die an dem Fahrzeug (1) installiert ist, wobei die elektrische Ausrüstung (11) umfasst:
eine elektrische Komponente (12), die an dem Bodenpaneel (2) installiert ist; und
ein Abdeckungselement (15), das an dem Bodenpaneel (2) installiert ist, um die elektrische Komponente (12) abzudecken, wobei
das Abdeckungselement (15) eine Seitenwand (15B), die dem ersten Kabelbaum (9) zugewandt ist, und einen Ausbauchungsteil (16) umfasst, der von einer Wandoberfläche (15a) der Seitenwand (15B) zu dem ersten Kabelbaum (9) hin auswölbt, und
der Ausbauchungsteil (16) den ersten Kabelbaum (9) von oben abdeckt.

2. Fahrzeug (1) gemäß Anspruch 1, wobei
das Querelement (5) einen ersten Befestigungsabschnitt (10A) zum Befestigen des ersten Kabelbaums (9) an dem Querelement (5) und einen zweiten Befestigungsabschnitt (10B, 10C) zum Befestigen des ersten Kabelbaums (9) an dem Querelement (5) umfasst, wobei der erste Befestigungsabschnitt (10A) oberhalb des Lochabschnitts (5a) angeordnet ist, der zweite Befestigungsabschnitt (10B, 10C) unterhalb des ersten Befestigungsteils (10A) angeordnet ist, und
der Ausbauchungsteil (16) sich oberhalb des ersten Befestigungsteils (10A) befindet und in einer Draufsicht auf das Fahrzeug (1) den ersten Befestigungsteil (10A) überlappt.

3. Fahrzeug (1) gemäß Anspruch 1 oder 2, ferner mit einem zweiten Kabelbaum (21, 22), wobei
das Bodenpaneel (2) mit einem Öffnungsabschnitt (2b) ausgebildet ist, durch den der zweite Kabelbaum (21, 22) in das Abdeckelement (15) eingeführt ist,
die elektrische Komponente (12) an einer Seitenoberfläche (12a), die der Seitenwand (15B) des Abdeckungselements (15) zugewandt ist, ein Terminalteil (13A, 13B) umfasst, mit dem der zweite Kabelbaum (21, 22) verbunden ist, und
der zweite Kabelbaum (21, 22) zu einem Zwischenraum (17) geführt ist, der durch den Ausbauchungsteil (16) festgelegt ist.

## Revendications

1. Véhicule (1) comprenant :
un panneau de plancher (2) ;
une traverse (5) avec une partie perforée (5a), la traverse (5) s'étendant dans la direction de la largeur du véhicule au-dessus du panneau de plancher (2) ;
un premier faisceau de câbles (9) fixé à la traverse (5) de manière à être situé au-dessus de la partie trouée (5a), le premier faisceau de câbles (9) s'étendant dans la direction de la largeur du véhicule ; et
un équipement électrique (11) installé sur le véhicule (1), l'équipement électrique (11) comprenant :
un composant électrique (12) installé sur le panneau de plancher (2) ; et
un élément de couvercle (15) installé sur le panneau de plancher (2) de manière à recouvrir le composant électrique (12), dans lequel
l'élément de couvercle (15) comprend une paroi latérale (15B) faisant face au premier faisceau de câbles (9), et une partie renflée (16) renflée à partir d'une surface de paroi (15a) de la paroi latérale (15B) vers le premier faisceau de câbles (9), et
la partie en saillie (16) recouvre le premier faisceau de câbles (9) par le dessus.

2. Véhicule (1) selon la revendication 1, dans lequel
la traverse (5) comprend une première partie de montage (10A) pour fixer le premier faisceau de câbles (9) à la traverse (5), et une deuxième partie de montage (10B, 10C) pour fixer le premier faisceau de câbles (9) à la traverse (5), la première partie de montage (10A) étant située au-dessus de la partie de trou (5a), la deuxième partie de montage (10B, 10C) étant située en dessous de la première partie de montage (10A), et
la partie bombée (16) étant située au-dessus de la première partie de montage (10A) et chevauchant la première partie de montage (10A) dans une vue en plan du véhicule (1).

3. Véhicule (1) selon la revendication 1 ou 2, comprenant en outre un deuxième faisceau de câbles (21, 22), dans lequel
le panneau de plancher (2) est formé avec une partie d'ouverture (2b) à travers laquelle le deuxième faisceau de câbles (21, 22) est introduit dans l'élément de couvercle (15),
le composant électrique (12) comprend, au niveau d'une surface latérale (12a) de celui-ci faisant face à la paroi latérale (15B) de l'élément de couvercle (15), une partie de terminaux (13A, 13B) à laquelle le deuxième faisceau de câbles (21, 22) est connecté, et
le deuxième faisceau de câbles (21, 22) est acheminé vers une partie d'espace (17) définie par la partie en saillie (16).
